Europäisches Patentamt

European Patent Office

Office européen des brevets

(19)

(11) Veröffentlichungsnummer: **0 268 694 B1**

# EUROPÄISCHE PATENTSCHRIFT

(12)

(45) Veröffentlichungstag der Patentschrift: 20.02.91

(51) Int. Cl.⁵: **H04L 7/04**, H04L 7/02, H04Q 7/04

(21) Anmeldenummer: 86116224.6

(22) Anmeldetag: 22.11.86

(54) Verfahren zur Synchronisation auf im Zeitmultiplexbetrieb ausgesendete Signale und zur Taktgewinnung hieraus.

(43) Veröffentlichungstag der Anmeldung:
01.06.88 Patentblatt 88/22

(45) Bekanntmachung des Hinweises auf die
Patenterteilung:
20.02.91 Patentblatt 91/08

(84) Benannte Vertragsstaaten:
DE FR GB IT NL SE

(56) Entgegenhaltungen:
WO-A-82/04515
DE-A- 3 417 358

(73) Patentinhaber: ANT Nachrichtentechnik GmbH
Gerberstrasse 33
D-7150 Backnang(DE)

(72) Erfinder: Sperlich, Josef, Dipl.-Ing.
Kelterweg 52
D-7150 Backnang(DE)

## Beschreibung

Die vorliegende Erfindung betrifft ein Verfahren zum Synchronisieren der Zeitmultiplexrahmen in einer zu einem Nachrichtenübertragungsnetz gehörenden dezentralen Unterstation auf die von ihr empfangenen und von einer Zentralstation ausgesendeten, ein Synchronwort enthaltenden Zeitmultiplexrahmen und zur Taktgewinnung aus den von der Zentralstation ausgesendeten Signalen.

In Netzen für die digitale Signalübertragung mit einer Zentralstation und einer oder mehreren dezentralen Unterstationen wird der Signaltakt in der Regel von der Zentralstation vorgegeben, während die Unterstationen den Takt aus der empfangenen Information zurückgewinnen und ihn auch für das Aussenden von Signalen zur Zentralstation benutzen. Bei Nachrichtenübertragungsnetzen, die wechselseitig betrieben werden, z.B. im Halbduplex-Betrieb oder Zeitmultiplexbetrieb (TDMA), ist auch während der empfangsfreien Zeit in den Unterstationen der Sendetakt bereitzustellen. Darüberhinaus ist insbesondere bei TDMA-Betrieb die genaue Synchronisation jeder Unterstation auf die von der Zentralstation gesendeten Zeitmultiplexrahmen erforderlich. Die hier angesprochenen Nachrichtenübertragungsnetze können solche sein mit digitaler Signalübertragung über elektrische oder Lichtwellenleiter-Kabel oder solche mit digitaler Signalübertragung per Funk. Bei den zuletzt genannten Funknetzen ist der Einsatz sowohl stationärer als auch mobiler Unterstationen möglich.

Der Erfindung liegt die Aufgabe zugrunde, ein Verfahren der eingangs genannten Art anzugeben, nach dem Unterstationen sich schnell und genau auf die von der Zentralstation ausgesendeten Zeitmultiplexrahmen aufsynchronisieren und auf einfache Weise den Signaltakt ableiten können.

Erfindungsgemäß wird diese Aufgabe durch die im Anspruch 1 angegebenen Merkmale gelöst.

Zweckmäßige Ausführungen der Erfindung gehen aus den Unteransprüchen hervor.

Anhand eines in der Zeichnung dargestellten Ausführungsbeispiels wird anschließend die Erfindung näher erläutert. In der Zeichnung zeigen:
Fig. 1 ein Blockschema, das den erfindungsgemäßen Verfahrensablauf verdeutlicht und
Fig. 2 ein den Verfahrensablauf darstellendes Signaldiagramm.

Das nachfolgend beschriebene Ausführungsbeispiel bezieht sich auf ein Mobilfunknetz, dessen Zentralstationen Funküberleitzentralen und dessen Unterstationen mobile Teilnehmer sind, die sich in den Funkverkehrsbereichen der einzelnen Funküberleitzentralen aufhalten. Bei der Synchronisierung und Taktableitung in mobilen Unterstationen sind gegenüber Nachrichtenübertragungsnetzen mit stationären Unterstationen besondere Gegebenheiten zu berücksichtigen. Aufgrund der Bewegung einer mobilen Unterstation relativ zu der Feststation treten Doppler Effekte auf, die sich als Taktfrequenzänderungen der empfangenen Signale auswirken. Zudem ändern sich die Ausbreitungsbedingungen für die von einer Zentralstation ausgesendeten und von einer mobilen Unterstation empfangenen Signale in Abhängigkeit vom jeweiligen Aufenthaltsort der Unterstation. Die sich ändernden Ausbreitungsbedingungen verursachen Phasenänderungen in den empfangenen Signalen. Abrupte Phasenänderungen können auch entstehen bei einem Frequenzsprungbetrieb, d.h. wenn Information für die Unterstation in aufeinanderfolgenden Zeitmultiplexrahmen bei unterschiedlichen Frequenzen von der Zentralstation ausgesendet wird. Deshalb muß die Unterstation in der Lage sein, solche Phasenänderungen im Empfangssignal auszuregeln.

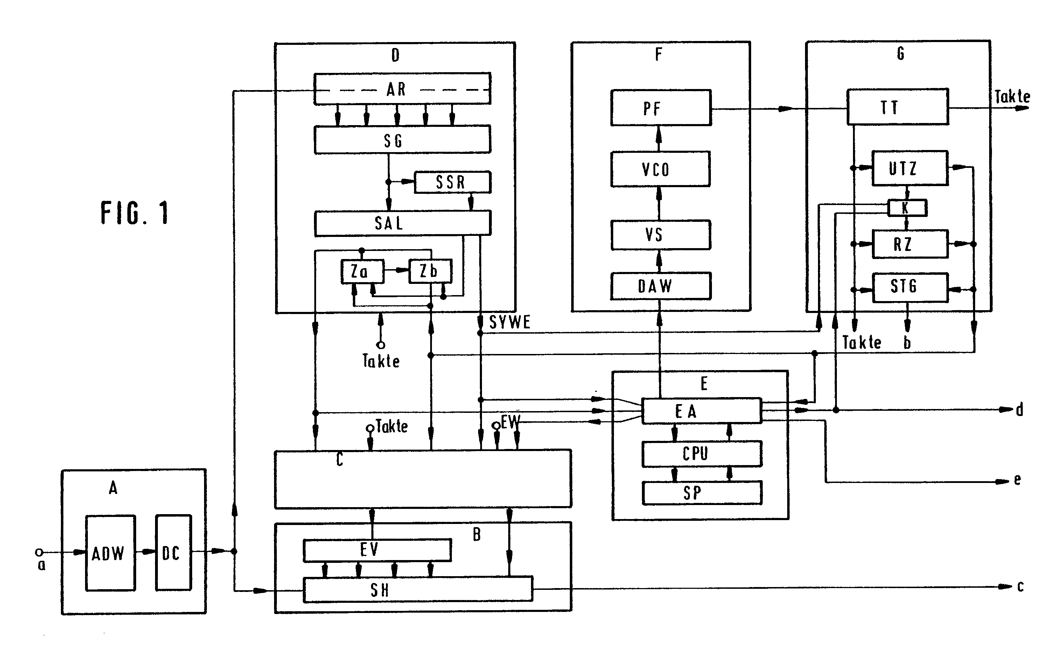

Die Fig. 1 zeigt ein Blockschema, bestehend aus sieben Hauptfunktionseinheiten A bis G, die die Synchronisierung der Unterstation auf die empfangenen Zeitmultiplexrahmen und die Taktgewinnung aus den in den Zeitmultiplexrahmen übertragenen Signalen bewerkstelligen.

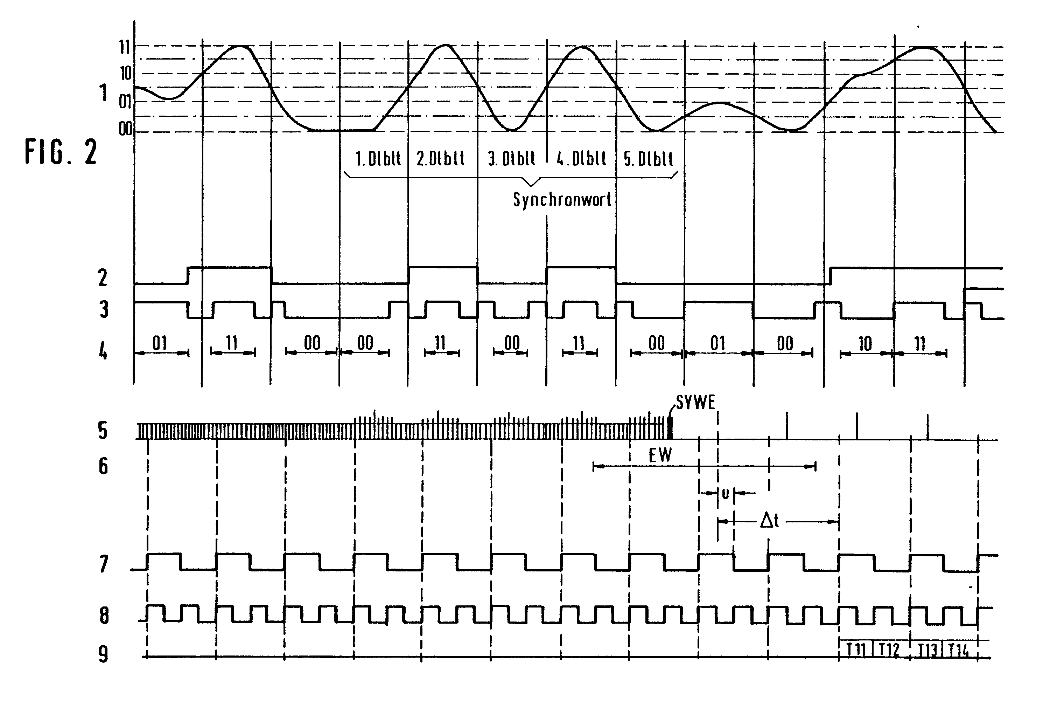

Am Eingang a eines Analog-Digital-Wandlers ADW liegt ein empfangenes Basisbandsignal an, das beispielsweise durch eine vierstufige Frequenzmodulation erzeugt worden ist. Ein solches Basisbandsignal entsteht in der Zentralstation dadurch, daß ein Trägersignal zwischen vier verschiedenen Frequenzablagen moduliert wird. Als Modulationssignal dient hierbei eine Dibitfolge mit den vier Signalzuständen 11, 10, 01 und 00, von denen jedes Dibit einer der vier Frequenzablagen zugeordnet ist. Im Empfänger werden die vier Frequenzablagen wiederum in ein Signal mit vier Signalzuständen umgesetzt, woraus dann z.B. ein in Zeile 1 der Fig. 2 dargestellter Basisbandsignalverlauf resultiert.

Im Analog-Digital-Wandler ADW wird das Basisband in einer Reihe von den Dibittakt (s. Zeile 7 in Fig. 2) unterteilenden Untertaktschritten (s. Zeile 5 in Fig. 2) abgetastet, und die einzelnen Abtastwerte werden digitalisiert. Eine Taktzentrale G in der Unterstation leitet von einem Bittakt (s. Zeile 8 in Fig. 2) den Dibittakt (s. Zeile 7 in Fig. 2) ab und liefert auch den Untertakt, der jeden Dibittaktschritt z.B. in 32 Untertaktschritte einteilt. Abgetastet wird das empfangene Basisband in jedem Untertaktschritt eines jeden Dibittaktschrittes. Ein Decodierer DC erzeugt aus den im Analog-Digital-Wandler ADW gebildeten digitalisierten Abtastwerten zwei in den Zeilen 2 und 3 der Fig. 2 dargestellte Digitalsignalfolgen, wobei die Signalfolge in der Zeile 2 jeweils aus dem höchstwertigen Bit und die Signalfolge in der Zeile 2 aus dem niederwertigen Bit der Dibits abgeleitet ist. Die Zeile 4 in Fig. 2 deutet die den beiden parallelen Digitalsignalfolgen zugeordneten Dibitwerte an.

Die in jeden zweiten Untertaktschritt abgetasteten, digitalisierten und decodierten Werte der von der Sendeseite (Zentralstation) her in Zeitmultiplexrahmen eingeordneten Signale werden an die Funktionseinheit D übergeben, welche aus jedem empfangenen Zeitmultiplexrahmen ein in diesem mitübertragenes Synchronwort zu erkennen sucht und daraus eine Information für die Synchronisation der in der Unterstation gebildeten Zeitmultiplexrahmen auf die von der Zentralstation ausgesendeten Zeitmultiplexrahmen ableitet.

In der Funktionseinheit D befindet sich ein Abtastwertregister AR mit zwei parallelen Schieberegistern. An diesen beiden Schieberegister werden die Bits der beiden parallelen Digitalsignalfolgen vom Ausgang des Decodierers DC übergeben und darin mit jedem zweiten Untertaktschritt um eine Schieberegisterstelle weitergeschoben. Besteht das Synchronwort, das in jeden übertragenen Zeitmultiplexrahmen eingefügt ist, z.B. aus 5 Dibits und werden die Abtastwerte eines jeden zweiten der 32 Untertaktschritte innerhalb eines jeden Dibittaktschrittes abgetastet, so sind zur Synchronworterkennung in jedem der zwei Schieberegister des Abtastwertregisters AR mindestens 4x16 Speicherstellen erforderlich.

Ausgehend von dem Beispiel mit 16 Abtasttakten pro Dibittaktschritt sind die 0., die 16., die 32., die 48. und die 64. Speicherstelle der beiden Schieberegister mit den fünf Eingängen eines Synchronwortgatters SG verbunden. Dieses Synchronwortgatter SG gibt an seinem Ausgang dann eine logische "1" ab, wenn in den genannten Speicherstellen (0, 16, 32, 48, 64) Bitwerte vorliegen, die mit denen des vorgegebenen Synchronwortes übereinstimmen.

Sobald am Ausgang des Synchronwortgatters SG eine logische "1" anliegt, d.h. ein Synchronwort korrekt erkannt worden ist, wird die logische "1" in ein Synchronschieberegister SSR übernommen. In das Synchronschieberegister SSR werden soviele logische "1" hineingeschoben, wie aufeinanderfolgende Abtastwerte innerhalb eines jeden zum Synchronwort gehörenden Dibittaktschrittes den richtigen Bitwert liefern. Das Synchronschieberegister SSR hat soviele Speicherplätze wie innerhalb eines Dibittaktschrittes maximal hintereinander Abtastwerte auftreten können, die alle den richtigen Bitwert wiedergeben.

Eine Synchronwort-Auswertelogik SAL sorgt dafür, daß zum Zeitpunkt der Übernahme der ersten logischen "1" in das Synchronschieberegister SSR der augenblickliche Zählerstand eines in der Taktzentrale G vorhandenen Unter taktschrittzählers UTZ, der in jedem Dibittaktschritt die Untertaktschritte von 1 bis 32 durchzählt, in einen Zwischenspeicher Za und der augenblickliche Zählerstand eines Rahmenzählers RZ, der die Dibittaktschritte von Beginn eines jeden empfangenen Zeitmultiplexrahmen mitzählt, in einen Zwischenspeicher Zb übernommen wird. Der Rahmenzähler RZ kann natürlich nur dann aktiv werden, wenn schon bekannt ist, mit welchem Dibittaktschritt der Beginn eines empfangenen Zeitmultiplexrahmens zusammenfällt, wenn also Synchronismus vorliegt. Der Zählerstand des Rahmenzählers RZ gibt zu dem Zeitpunkt der ersten logischen "1" in das Synchronschieberegister SSR die Nummer desjenigen Dibittaktschrittes (gezählt vom Rahmenbeginn) an, in dem das letzte Dibit des Synchronwortes richtig erkannt worden ist.

Der im Zwischenspeicher Za abgelegte Zählerstand wird nun mit jeder weiteren in das Synchronschieberegister SSR eingeschobenen logischen "1" um einen Zählschritt erhöht, jedoch nur solange wie hintereinander ununterbroschen logische "1" folgen. Da in das Abtastwertregister AR nur die Signalabtastwerte eines jeden zweiten Untertaktschrittes übernommen werden, kann auch nur zu jedem zweiten Untertaktschritt eine logische "1" in das Synchronschieberegister SSR hineingeschoben werden. Würden beispielsweise zum 2., 4. und 6. Untertaktschritt logische "1" in das Synchronschieberegister SSR eingeschoben, weil die Abtastwerte in diesen Untertaktschritten die Synchronwortdibits richtig wiedergeben, so würde in den Zwischenspeicher Za zunächst eine 2 eingeschrieben, welche der Nummer des Untertaktschrittes entspricht, zu dem die erste von den drei logischen "1" in dem Synchronregister SSR erscheint. Bei den nächsten beiden zu den Untertaktschritten 4 und 6 erscheinenden logischen "1" zählt der Zwischenspeicher Za um zwei Schritte auf 4 hoch. Der nun im Zwischenspeicher Za vorliegende Zählerstand 4 gibt die Nummer des Untertaktschrittes an, der von allen Untertaktschritten (2, 4, 6) mit richtigen Abtastwerten der mittlere ist. Erfährt der Zwischenspeicher Za in dieser Zählfolge einen Überlauf d.h. zählt er z.B. von 32 auf 1, so wird dadurch der Zählerstand des Zwischenspeichers Zb um einen Schritt hochgezählt.

In der Zeile 5 der Fig. 2 sind zur Verdeutlichung des geschilderten Verfahren die Untertaktschritte durch die dicht nebeneinander liegenden kurzen Striche, die Untertaktschritte mit den die Synchronwortdibits richtig wiedergebenden Abtastwerten durch die mittellangen Striche und die Untertaktschritte mit den jeweils mittleren der die Synchronwortdibits richtig wiedergebenden Abtastwerten durch die längsten Striche angedeutet.

Die Schiebevorgänge im Abtastwertregister AR und im Synchronschieberegister SSR werden beendet, sobald die erste in das Synchronschieberegister SSR übergebene logische "1" bis in seinen letzten Speicherplatz durchgeschoben worden ist. Zu diesem Zeitpunkt wird von der Synchronwort-Auswertelogik SAL das Signal SYWE (s. Zeile 5 in Fig. 2) abgegeben, welches signalisiert, daß das Synchronwort des empfangenen Zeitmultiplexrahmens richtig erkannt worden ist.

Die nach dem Synchronwort folgende Nutzinformation im Zeitmultiplexrahmen wird nun in jedem Dibittaktschritt in dem Untertaktschritt mit der im Zwischenspeicher Za vorliegenden Nummer abgetastet, denn dieser Untertaktschritt ist der optimale Zeitpunkt für eine möglichst fehlerfreie Abtastung.

In jedem in der Unterstation gebildeten Zeitmultiplexrahmen wird ein sogenannter Synchronwort-Erwartungszeitraum EW (s. Zeile 6 in Fig. 2) festgelegt, der einige Dibittaktschritte lang ist. Tritt bei bereits bestehendem Synchronismus in einem Zeitmultiplexrahmen in dem Synchronwort-Erwartungszeitraum kein Signal SYWE auf, so wird das als in diesem Zeitmultiplexrahmen nicht erkanntes Synchronwort gewertet.

Im Falle eines von der Synchronwort-Auswertelogik SAL abgegebenen Signals SYWE, d.h. korrekte Erkennung des Synchronwortes, werden die Speicherinhalte der Zwischenspeicher Za und Zb in einen Speicher SP der Funktionseinheit E eingeschrieben. Wird nämlich in manchen empfangenen Zeitmultiplexrahmen das Synchronwort nicht erkannt, so richten sich die Funktionseinheiten C und B bei der Auswahl der Nutzsignalabtastwerte und deren synchrongerechte Einordnung in Zeitmultiplexrahmen nach dem im Speicher SP abgelegten vormals aus den Zwischenspeichern Za und Zb übernommenen Werten.

Die Functionseinheit E enthält neben dem Speicher SP noch einen Rechenprozessor CPU und eine zugehörige Ein-Ausgabe-Einheit EA. Dieser Rechenprozessor CPU ermittelt nun aus dem in Zwischenspeicher Za vorliegenden Wert, der ja denjenigen Untertaktschritt in den einzelnen Dibittaktschritten angibt, der als der optimale Abtastzeitpunkt bestimmt worden ist, und dem in der Mitte der Dibittaktschritte liegenden Untertaktschritt die Differenz. Diese in der Fig. 2 mit u bezeichnete Differenz gibt Auskunft über den Phasenversatz des in der Unterstation erzeugten Dibittaktes (s. Zeile 7 in Fig. 2) und dem Dibittakt der empfangenen von der Zentralstation ausgesendeten Zeitmultiplexrahmen. Es ist nun das Ziel, diesen Phasenversatz u zu Null werden zu lassen. Gerade in Mobilfunknetzen ist es wichtig, den Phasenversatz zu eliminieren, weil aus der Schleifenlaufzeit der Signale von der Zentralstation zur mobilen Unterstation und wieder zurück die Entfernung der Unterstation von der Zentralstation ermittelt wird und ein solcher Phasenversatz, der bei der üblichen Entfernungsermittlung wie andere Signallaufzeiten in den Geräten kompensiert werden, einen Entfernungsfehler verursacht.

Aus dem Phasenversatz u leitet der Rechenprozessor CPU eine Stellgröße für einen in der Funktionseinheit angeordneten spannungsgesteuerten Oszillator VCO ab, dessen über eine Pulsformerschaltung PF geleitetes Ausgangssignal den maßgeblichen Takt in der Unterstation liefert, aus dem dann in der Taktzentrale G von einem Taktteiler TT der Bittakt, der Dibittakt und der Untertakt abgeleitet werden. Der spannungsgesteuerte Oszillator VCO ändert in Abhängigkeit der vom Rechenprozessor CPU gelieferten Stellgröße seine Taktfrequenz so, daß schließlich der Phasenversatz verschwindet (u = 0).

Der die Stellgröße für den spannungsgesteuerten Oszillator ableitende Rechenprozessor simuliert einen proportional oder proportional-differential wirkenden Regler solange die Unterstation noch nicht auf die empfangenen Zeitmultiplexrahmen synchronisiert ist. Im synchronen Zustand simuliert der Rechenprozessor CPU dann einen proportional-integral wirkenden Regler aus folgenden Gründen: Der spannungsgesteuerte Oszillator VCO kann in seiner Mittenfrequenz nur mit einer gewissen Toleranz bereitgestellt werden. Hinzu kommt die Toleranz des Taktgenerators in der Zentralstation. Und bei mobilen Unterstationen sind die Taktfrequenzänderungen aufgrund des Doppler Effekts zu berücksichtigen. Dies erfordert auch eine quasistationäre Angleichung der Mittenfrequenz des spannungsgesteuerten Oszillators VCO. Da eine Proportionalregelung für die Mittenfrequenzänderung des spannungsgesteuerten Oszillators VCO einen Restphasenversatz u verlangt, wird, um trotzdem die Einstel lung der Phase auf u = 0 zu erreichen, die Regelung mit einem Integralanteil ausgeführt.

Die Stellgröße aus dem Rechenprozessor CPU wird als Digitalsignal der Funktionseinheit F übergeben, dort von einem Digital-Analog-Wandler DAW in einen analogen Spannungswert umgesetzt und dieser Spannungswert einer die Sollfrequenz des spannungsgesteuerten Oszillators VCO einstellenden Vorspannung in einem Vorspannungsgeber VS überlagert.

Im Rechenprozessor CPU wird in einem ersten Speicherplatz festgeschalten, ob z.B. in zwei aufeinanderfolgenden empfangenen Zeitmultiplexrahmen das Synchronwort korrekt erkannt worden ist. Dabei wird in einen zweiten Speicher im Rechenprozessor CPU eine Wertzahl - z.B. 7 - eingeschrieben. Jedesmal wenn nun in einem empfangenen Zeitmultiplexrahmen das Synchronwort nicht erkannt worden ist, im Synchronwort-Erwartungszeitraum EW das Signal SYWE von der Funktionseinheit E also nicht abgegeben worden ist, wird die Wertzahl im 1 erniedrigt. Wenn in acht direkt aufeinanderfolgenden Zeitmultiplexrahmen das Synchronwort nicht erkannt worden ist, wird der Synchronität ausdrückende Inhalt im ersten Speicher des Rechenprozessors CPU gelöscht und Synchronausfall signalisiert. Wird weniger als achtmal in Folge das Synchronwort nicht erkannt, so wird der zweite Speicher wieder auf die höchste Wertzahl gesetzt und kein Synchronausfall signalisiert.

Wie bereits gesagt, wird in der Funktionseinheit G der vom spannungsgesteuerten Oszillator VCO gelieferte Takt in einem Taktteiler TT in den Dibittakt, dessen Taktschritte pro Zeitmultiplexrahmen vom Rahmenzähler RZ gezählt werden, und in den Untertakt geteilt, dessen Taktschritte pro Dibittaktschritt in dem Untertaktschrittzähler UTZ gezählt werden. Im Synchronzustand sind der Untertaktschrittzähler UTZ und der Rahmenzähler RZ über eine Koppeleinrichtung K miteinander gekoppelt. Diese Koppeleinrichtung K bewirkt, daß der Rahmenzählerstand bei einem Wechsel des Untertaktzählers UTZ von der höchsten Zählerstellung auf die niedrigste um 1 erhöht wird.

Ein Steuersignalgenerator STG stellt unter Zuhilfenahme der Zählerstände des Rahmenzählers RZ und des Untertaktschrittzählers UTZ an seinem Ausgang b einige von den anderen Funktionseinheit benötigte Steuersignale, z.B. Beginn und Ende des Synchronwort-Erwartungszeitraumes EW, Dauer der Nutzinformationsaufnahme nach erkanntem Synchronwort u.a., zur Verfügung.

Die Funktionseinheit C erhält von der Taktzentrale G die laufenden Zählerstände des Untertaktschrittzählers UTZ und des Rahmenzählers RZ, ferner das die Synchronworterkennung anzeigende Signal SYWE, Angaben über Beginn und Ende des Synchronwort-Erwartungszeitraums EW, die Mitteilung aus des Funktionseinheit E, ob Synchronität vorliegt, und die aktuellen oder die im Speicher SP abgelegten Inhalte der Zwischenspeicher Za und Zb.

Solange sich die Unterstation nicht im synchronen Zustand befindet, wird durch die Funktionseinheit C das Auslesen der an die Funktionseinheit B aus der Funktionseinheit A übergebenen Abtastwerte der empfangenen Nutzinformation gesperrt. Wenn ein Synchronwort erkannt worden ist, also das Signal SYWE anliegt, veranlaßt die Funktionseinheit C, daß jedesmal, wenn Koinzidenz zwischen dem Zählerstand des laufenden Untertaktzählers UTZ und der im Zwischenspeicher Za stehenden Untertaktschrittnummer vorliegt, der in diesem Untertaktschritt abgetastete Wert der Nutzinformation in ein Schieberegister SH der Funktionseinheit B eingeschrieben wird. Dieser Vorgang läuft auch dann ab, wenn das Synchronwort nicht erkannt worden ist und bei Synchronität auf den im Speicher SP abgelegten Speicherinhalt des Zwischenspeichers Za zurückgegriffen wird.

Die in Fig. 2 mit $\Delta$ t bezeichnete Differenz

zwischen dem durch den Wert des Zwischenspeichers Zb angegebenen Synchronwortende und einem willkürlich gewählten, den Beginn der Nutzinformation im Zeitmultiplexrahmen festlegenden Bittaktschritt T11 (s. Zeile 9 in Fig. 9) bestimmt den Speicherbereich in dem Schieberegister SH, in den die Abtastwerte der Nutzinformation eingeschrieben werden. Ein Einschreibeverteiler EV besorgt die Übernahme der Abtastwerte in die richtigen Speicherplätze des Schieberegisters SH.

Das serielle Auslesen der Nutzinformation aus dem Schieberegister SH erfolgt immer während der Pulspause des höchsten Untertaktschrittes eines jeden Dibittaktschrittes. Damit ist sichergestellt, daß keine Überlappung zwischen Einschreibe- und Auslesevorgang auftritt.

Das oben beschriebene Verfahren gewährleistet, daß am Ausgang C der Funktion B die Empfangssignale möglichst fehlerfrei abgetastet vorliegen und dabei in Zeitmultiplexrahmen eingeordnet sind, die auf die von der Zentralstation ausgesendeten Zeitmultiplexrahmen synchronisiert sind.

Wie bereits dargelegt, wird vom Rechenprozessor CPU der Funktionseinheit E bestimmt, ob Synchronität vorliegt oder ob Synchronausfall herrscht. Diese Information signalisiert die Funktionseinheit E an ihrem Ausgang d. Dabei gibt die Funktionseinheit an dem Ausgang d für den Empfänger und den Sender in der Unterstation getrennte Signale ab, welche Synchronität bzw. Synchronausfall signalisieren. Dem Sender der Unterstation wird nämlich erst dann Synchronität und damit Freigabe für den Sendebetrieb signalisiert, wenn bei mehreren (mindestens 2) aufeinanderfolgenden empfangenen Zeitmultiplexrahmen das Synchronwort korrekt erkannt worden ist. Dagegen wird für den Empfänger bereits nach dem ersten richtig erkannten Synchronwort Synchronität signalisiert. Synchronausfall wird dem Sender allerdings erst nach einer größeren Zahl hintereinander nicht erkannter Synchronworte signalisiert als dem Empfänger. Dadurch kann der Sendebetrieb der Unterstation bei Empfangsstörungen, die länger als die Synchronzustands-Haltezeit des Empfängers dauern, noch aufrechterhalten werden.

Soll eine mobile Unterstation zeitgestaffelt mit mehr als einer Zentralstation in Verbindung treten, z.B. zum Zwecke der Entfernungsmessung oder für eine Übergabeprozedur (Hand-over) von einer Zentralstation eines Funkverkehrsbereichs zu einer Zentralstation eines anderen Funkverkehrsbereichs, so kann das beschriebene Verfahren vorteilhaft wie folgt angewandt werden:

Während des Nutzinformationsaustausches mit einer Zentralstation wickelt die mobile Unterstation zu besagten Meßzwecken mit benachbarten Zentralstationen einen Datenaustausch ab. Die Steuergröße für den spannungsgesteuerten Oszillator VCO in der Funktionseinheit F wird allerdings nur bei der Synchronworterkennung in denjenigen Zeitschlitzen abgeleitet, in denen die Nutzinformation übertragen wird. In den Zeitschlitzen, in denen nur Meßdaten übertragen werden, wird zwar auch eine Synchronworterkennung durchgeführt und daraus der Phasenversatz u (s. Fig. 2) ermittelt, aber daraus keine Stellgröße für den spannungsgesteuerten Oszillator VCO hergeleitet, sondern der ermittelte Phasenversatz u wird von dem Rechenprozessor CPU als zusätzliche Signallaufzeit zwischen der mobilen Unterstation und einer benachbarten Zentralstation ausgewertet und an diese Zentralstation übertragen, in der bei der Entfernungsberechung die durch den Phasenversatz hervorgerufene Signallaufzeit korrigierend berücksichtigt wird. Die Funktionseinheit E stellt an ihrem Ausgang e die aus dem Phasenversatz u abgeleitete Korrekturgröße für die Entfernungsberechnung zur Verfügung.

**Ansprüche**

1. Verfahren zum Synchronisieren der Zeitmultiplexrahmen in einer zu einem Nachrichtenübertragungsnetz gehörenden dezentralen Unterstation auf die von ihr empfangenen und von einer Zentralstation ausgesendeten, ein Synchronwort enthaltenden Zeitmultiplexrahmen und zur Taktgewinnung aus den von der Zentralstation ausgesendeten Signalen, dadurch gekennzeichnet ,

daß in der Unterstation die empfangenen Signale in Taktschritten des der Unterstation eigenen Bittaktes abgetastet werden und die Abtastwerte auf Übereinstimmung mit dem bekannten Synchronwort überprüft werden,

daß die zeitliche Lage derjenigen das Synchronwort korrekt wiedergebenden Abtastwerte innerhalb der Bittaktschritte ermittelt wird,

daß dann der Versatz (u) der das Synchronwort korrekt wiedergebenden Abtastwerte gegenüber der Mitte der Bittaktschritte bestimmt wird,

und daß aus diesem Versatz eine Stellgröße für einen den Bittakt in der Unterstation erzeugenden spannungsgesteuerten Oszillator (VCO) abgeleitet wird, welche die Taktfrequenz des spannungsgesteuerten Oszillators (VCO) so nachregelt, daß der Versatz verschwindet und somit die optimalen Zeitpunkte für die Abtastung sowohl des Synchronwortes als auch der nachfolgenden Nutzinformation in der Mitte der Taktschritte des vom spannungsgesteuerten Oszillators (VCO) erzeugten Bittaktes liegen.

2. Verfahren nach Anspruch 1, dadurch gekennzeichnet ,

daß jeder der Taktschritte des vom spannungsgesteuerten Oszillator (VCO) erzeugten Bittaktes in mehrere Untertaktschritte unterteilt wird,

daß in jedem Zeitmultiplexrahmen höchstens bis zum Ende eines vorgebbaren Synchronwort-Erkennungszeitraum (EW) das empfangene Signal mindestens zu jedem zweiten Untertaktschritt abgetastet wird und die Abtast werte digitalisiert werden,

daß diese digitalisierten Abtastwerte mit dem Bitmuster des fest vorgegebenen Synchronwortes verglichen werden,

daß, sobald das Synchronwort noch vor dem Ende des Synchronwort-Erwartungszeitraumes (EW) aus den Abtastwerten erkannt worden ist, festgehalten wird, im wievielten Untertaktschritt, gezählt vom Beginn der mit dem empfangenen Synchronwort belegten Bittaktschritte, ein das Synchronwort korrekt wiedergebender Abtastwert auftritt,

daß dann ermittelt wird, um wieviele Untertaktschritte der festgehaltene, die Lage der korrekten Synchronwort-Abtastwerte innerhalb der Bittaktschritte wiedergebende Untertaktschritt gegenüber dem in der Mitte der Bittaktschritte liegenden Untertaktschritt versetzt ist und aus diesem Untertaktschrittversatz (u) die Stellgröße für den spannungsgesteuerten Oszillator (VCO) abgeleitet wird,

und daß in allen Bittaktschritten nach dem korrekt erkannten Synchronwort die Nutzinformation in dem gleichen Untertaktschritt abgetastet wird wie er zuvor bei der Synchronworterkennung als der in den einzelnen Bittaktschritten den optimalen Abtastwert liefernde Untertaktschritt ermittelt worden ist.

3. Verfahren nach Anspruch 2, dadurch gekennzeichnet ,

daß, wenn die Abtastwerte in mehreren Untertaktschritten der mit dem empfangenen Synchronwort belegten Bittaktschritte hintereinander das Synchronwort korrekt wiedergeben, der mittlere dieser aufeinanderfolgenden Untertaktschritte bestimmt wird

und daß dessen Versatz (u) gegenüber dem in Bittaktschrittmitte liegenden Untertaktschritt ermittelt und daraus die Stellgröße für den spannungsgesteuerten Oszillator (VCO) abgeleitet wird.

4. Verfahren nach einem der vorhergehenden Ansprüche, dadurch gekennzeichnet ,

daß bis zum Erreichen der Phasengleichheit (u = 0) zwischen dem Bittakt in der Unterstation und dem Bittakt der von der Zentralstation ausgesendeten Zeitmultiplexrahmen aus dem Untertaktschrittversatz zwischen dem eine optimale Abtastung gewährenden Untertaktschritt und der Bittaktschrittmitte die Stellgröße für den spannungsgesteuerten Oszillator (VCO) über einen proportional oder proportional-differential wirkenden Regler abgeleitet wird

und daß nach erreichter Phasengleichheit (u = 0) die Stellgröße über einen proportional-integral wirkenden Regler abgeleitet wird.

5. Verfahren nach einem der vorhergehenden Ansprüche, dadurch gekennzeichnet ,

daß im Falle eines in einem Zeitmultiplexrahmen bis zum Ablauf des Synchronwort-Erkennungszeitraumes (EW) nicht erkannten Synchronwortes die Nutzinformation innerhalb der ihr zugeordneten Bittaktschritte in einem Untertaktschritt abgetastet wird, der bei der Erkennung des Synchronwortes in einem vorangegangenen Zeitmultiplexrahmen als der eine optimale Abtastung gewährende Untertaktschritt ermittelt worden ist

und daß bei einer festgelegten Zahl hintereinander nicht erkannter Synchronworte Synchronausfall signalisiert wird.

6. Verfahren nach Anspruch 5, dadurch gekennzeichnet ,

daß der Signalempfang der Unterstation bei Synchronausfall unterbrochen wird,

daß der Sendebetrieb der Unterstation erst aufgenommen wird, wenn bei mindestens zwei hintereinanderfolgenden empfangenen Zeitmultiplexrahmen das Synchronowort korrekt erkannt worden ist,

und daß für den Sendebetrieb ein diesen abbrechender Synchronausfall nach einer größeren Zahl hinereinander nicht erkannter Synchronworte signalisiert wird als sie für die Signalisierung des Synchronausfalls für den Empfangsbetrieb festgelegt worden ist.

7. Verfahren nach einem der vorhergehenden Ansprüche, dadurch gekennzeichnet ,

daß bei Verbindungen der Unterstation mit mehr als einer Zentralstation die Stellgröße für den spannungsgesteuerten Oszillator (VCO) aus dem Versatz (u) abgeleitet wird, der bei der Signalübertragung mit nur einer der Zentralstationen ermittelt worden ist

und daß dieser Versatz (u) für die Signalübertragung zu den anderen Zentralstation bereitgestellt wird.

**Claims**

1. Method for the synchronisation of the time multiplex frames in a decentralised substation belonging to a communications transmission network to the time multiplex frame, which is received by it and emitted from a central station and which contains a synchronising word, and for the recovery of pulses from the signals emitted by the central station, characterised thereby, that the received signals are scanned in the substation in pulse steps of the bit beat belonging to the substation and the scanning values are tested for agreement with the known synchronising word, that the time position of those scanning values within the bit beat is determined, which correctly reproduce the synchronising word, that the displacement (u) of the scanning values, which correctly reproduce the synchronising word, from the centre of the bit beat steps is then determined and that a setting magnitude for a voltage-controlled oscillator (VCO) producing the bit beat in the substation is derived from this displacement and so regulates the pulse frequency of the voltage-controlled oscillator (VCO) that the displacement disappears and the optimum instants for the scanning of the synchronising word as well as also of the following wanted information signal lie in the centre of the pulse steps of the bit beat produced by the voltage-controlled oscillator (VCO) are thus present.

2. Method according to claim 1, characterised thereby, that each of the pulse steps of the bit beat produced by the voltage-controlled oscillator (VCO) is subdivided into several sub-beat steps, that the received signal is scanned at least at each second sub-beat step in each time multiplex frame at most to the end of a presettable synchronising word recognition time space (EW) and the scanning values are digitalised, that these digitalised scanning values are compared with the bit pattern of the fixedly preset synchronising word, that as soon as the synchronising word has been recognised from the scanning values still before the end of the synchronising word recognition time space (EW), it is recorded in which sub-beat step, counted from the beginning of the bit beat steps occupied by the received synchronising word, a scanning value appears, which correctly reproduces the synchronising word, that it then determined by how many sub-beat steps the recorded sub-beat step, which reproduces the position of the correct synchronising word scanning values within the bit beat steps, is displaced relative to the sub-beat step lying in the centre of the bit beat steps and the setting magnitude for the voltage-controlled oscillator (VCO) is derived from this sub-beat step displacement (u), and that the wanted information signal in all bit beat steps after the correctly recognised synchronising word is scanned in the same sub-beat step as was determined previously for the recognition of the synchronising word as the sub-beat step supplying the optimum scanning value in the individual bit beat steps.

3. Method according to claim 2, characterised thereby, that when the scanning values in several sub-beat steps of the bit beat steps occupied by the received synchronising word, one after the other correctly reproduce the synchronising word, the middle one of these successive sub-beat steps is determined and that its displacement (u) relative to the sub-beat step lying in bit beat step centre is determined and the setting magnitude for the voltage-controlled oscillator (VCO) is derived therefrom.

4. Method according to one of the preceding claims, characterised thereby, that until phase equality (u = O) is reached between the bit beat in the substation and the bit beat of the time multiplex frame emitted by the central station, the setting magnitude for the voltage-controlled oscillator (VCO) is derived by way of a proportionally or proportionally-differentially acting regulator from the sub-beat step displacement between the bit beat step centre and the sub-beat step affording an optimum scanning and that the setting magnitude is derived by way of a proportionally-integrally acting regulator after phase equality (u = O) is reached.

5. Method according to one of the preceding claims, characterised thereby, that in the case of a synchronising word not being recognised in a time multiplex frame before the run-down of the synchronising word recognition time space (EW), the wanted information signal within the bit beat steps associated therewith are scanned in a sub-beat step which was determined as the sub-beat step affording an optimum scanning during the recognition of the synchronising word in a preceding time multiplex frame and that a failure of synchronisation is signalled in the case of a fixed number of successive unrecognised synchronising words.

6. Method according to claim 5, characterised thereby, that the signal reception of the substation is interrupted in case of a failure of synchronisation, that the transmitting operation of the substation is resumed only when the synchronising word has been recognised correctly in at least two successively received time multiplex frames and that a failure of synchronisation breaking off the transmitting operation is signalled for this after a greater number of successive unrecognised synchronising words than was fixed for the signalling of a failure of synchronisation for the receiving operation.

7. Method according to one of the preceding claims, characterised thereby, that in the case of connections of the substation with more than one central station, the setting magnitude for the voltage-controlled oscillator (VCO) is derived from the displacement (u), which was determined for the signal transmission with only one of the central stations and that this displacement (u) is placed ready for the signal transmission to the other central stations.

## Revendications

1. Procédé de synchronisation de la trame de multiplexage temporel reçue par une sous-station décentralisée appartenant à un réseau de télécommunication sur la trame de multiplexage temporel émise par la station centrale et contenant un mot de synchronisation, et de régénération du signal d'horloge à partir des signaux émis par la station centrale caractérisé en ce que, dans la sous-station, les signaux reçus sont échantillonnés par pas de fréquence d'une fréquence de bit générée par la sous-station et les valeurs échantillonnées sont analysées pour détecter la coïncidence avec le mot de synchronisation connu, en ce que la position temporelle des valeurs d'échantillonnage représentant correctement le mot de synchronisation est déterminée à l'intérieur des pas de fréquence de bit, en ce que l'on détermine ensuite le décalage (u) par rapport au centre des pas de fréquence de bit des valeurs échantillonées représentant correctement le mot de synchronisation et en ce que l'on dérive de ce décalage une grandeur de réglage pour l'oscillateur commandé en tension (VCO) générant la fréquence de bit dans la sous-station, qui permet de corriger la fréquence de l'oscillateur commandé en tension (VCO) de manière à ce que le décalage disparaisse et que l'on ait les instants optimaux pour l'échantillonnage à la fois du mot de synchronisation et des informations utiles qui suivent au centre des pas de fréquence de la fréquence de bit générée par l'oscillateur commandé en tension (VCO).

2. Procédé selon la revendication 1, caractérisé en ce que chacun des pas de fréquence de la fréquence de bit générée par l'oscillateur commandé en tension (VCO) est subdivisé en plusieurs pas de fréquence élémentaire, en ce que, au cours de chaque trame de multiplexage temporel, le signal reçu est échantillonné au moins sur un pas de fréquence élémentaire sur deux et les valeurs échantillonnées numérisées au maximum jusqu'à la fin d'une période d'attente du mot de synchronisation (EW) pré-é-déterminée, en ce que ces valeurs échantillonnées numérisées sont comparées avec le modèle de bits du mot de synchronisation prédéterminé, en ce que, dès que le mot de synchronisation est détecté dans les valeurs échantillonées avant la fin de la période d'attente du mot de synchronisation (EW), on note dans quel pas de fréquence élémentaire existe une valeur d'échantillonnage reproduisant correctement le mot de synchronisation, à compter du début des pas de fréquence de bits occupés par le mot de synchronisation reçu, en ce que l'on détermine ensuite de combien de pas de fréquence élémentaire est décalé le pas de fréquence élémentaire reproduisant la position des valeurs d'échantillonnage correctes du mot de synchronisation à l'intérieur des pas de fréquence de bit par rapport au pas de fréquence élémentaire se trouvant au centre les pas de fréquence de bits et la grandeur de réglage de l'oscillateur commandé en tension (VCO) à partir de ce décalage des pas de fréquence élémentaire (u), et en ce que, dans tous les pas de fréquence de bits suivant le mot de synchronisation correctement détecté, les informations utiles sont échantillonnées dans le même pas de fréquence élémentaire que celui dont on a auparavant déterminé lors de la détection du mot de synchronisation qu'il fournissait la valeur d'échantillonnage optimale dans les différents pas de fréquence de bits.

3. Procédé selon la revendication 2, caractérisé en ce que, lorsque les valeurs échantillonnées restituent correctement le mot de synchronisation dans plusieurs pas de fréquence élémentaire des pas de fréquence de bits occupés par le mot de synchronisation reçu, on détermine le pas médian de ces pas de fréquence élémentaire successifs et en ce que son décalage (u) par rapport au pas de fréquence élémentaire se trouvant au centre du pas de fréquence de bit est déterminé et est utilisé pour former la grandeur de réglage de l'oscillateur commandé en tension (VCO).

4. Procédé selon l'un des revendications précédentes, caractérisé en ce que, jusqu'à la mise en phase (u = 0) entre la fréquence des bits de la sous-station et la fréquence des bits de la trame de multiplexage temporel émise par la station centrale, on dérive du décalage des pas de fréquence élémentaire entre le pas de fréquence élémentaire assurant un échantillonnage optimal et le centre du pas de fréquence de bits une grandeur de réglage pour l'oscillateur commandé en tension (VCO) par l'intermédiaire d'un régulateur à fonctionnement proportionnel ou proportionnel-différentiel, et en ce que, après la mise en phase (u = 0), la grandeur de réglage est dérivée par un régulateur à fonctionnement proportionnel-intégral.

5. Procédé selon l'une des revendications précédentes, caractérisé en ce que, en cas de non-détection du mot de synchronisation dans une trame de multiplexage temporel à l'écoulement de la période d'attente du mot de synchronisation (EW), les informations utiles sont échantillonnées à l'intérieur des pas de fréquence de bit qui leur sont affectés dans le pas de fréquence élémentaire qui avait été déterminé dans une trame de multiplexage temporel précédente comme le pas de fréquence élémentaire assurant un échantillonnage optimal pour la détection du mot de synchronisation et en ce que la perte de synchronisation est signalée après un nombre prédéterminé de mots de synchronisation non détectés.

6. Procédé selon la revendication 5, caractérisé en ce que la réception du signal par la sous-station est interrompue en cas de perte de la synchronisation, en ce que l'émission de la sous-station n'est validée que lorsque le mot de synchronisation a été correctement détecté sur au moins deux trames de multiplexage temporel reçues successivement et en ce que, pour l'émission, la perte de synchronisation et donc l'interruption ne sont signalées qu'après un plus grand nombre de mots de synchronisation successivement non détectés que ce n'est le cas pour la signalisation à la fonction de réception de la perte de synchronisation.

7. Procédé selon l'une des revendications précédentes, caractérisé en ce que, pour les liaisons de la sous-station avec plus d'une station centrale, la grandeur de réglage de l'oscillateur commandé en tension (VCO) est dérivée du décalage (u) qui est déterminé dans la transmission du signal avec une seule des stations centrales et en ce que ce décalage (u) est fourni pour la transmission du signal aux autres stations centrales.

FIG. 1

FIG. 2

1
11
10
01
00

1. Dlblt | 2. Dlblt | 3. Dlblt | 4. Dlblt | 5. Dlblt

Synchronwort

2

3

4  | 01 | 11 | 00 | 00 | 11 | 00 | 11 | 00 | 01 | 00 | 10 | 11 |

SYWE

5

6  EW

U

Δt

7

8

9  | T11 | T12 | T13 | T14 |

EP 0 268 694 B1